# EUROPEAN PATENT APPLICATION

(11) **EP 1 507 356 A2**
(43) Date of publication of application: **16.02.2005**
(21) Application number: 04012076.8
(22) Date of filing: 21.05.2004
(51) Int. Cl.: H04L 9/18, H04L 9/08

(54) **Cryptographic method**

(30) Priority: 22.05.2003 JP 2003144433
(71) Applicant: MATSUSHITA ELECTRIC INDUSTRIAL CO., LTD., Kadoma-shi, Osaka 571-0050 (JP)
(72) Inventor: Sato, Tomoya, Yamatotakada-shi, Nara, 635-0054 (JP); Fujiwara, Makoto, Nishikyo-ku, Kyoto-shi, Kyoto 615-8256 (JP)
(74) Representative: Böckelen, Rainer

(57) **Abstract**

The present invention provides an encryption method which enables to change a secret key B by means of control software D of a secret information protection system in question incorporated outside a secret information protection system. For secret information A which is a key or contents required to be protected, the encryption method comprises a decryption circuit 1b for encrypting or decrypting the secret information A to encrypted secret information Enc (A, B) by means of a secret key B for encrypting or decrypting the secret information A, wherein a secret key C is supplied to a shift register 2a, the secret key C is rotated, and the secret key B is generated. The number of rotation bits of the shift register 2a can be changed by a selection signal which is set up by the control software D, and changes the secret key B.

## Description

### BACKGROUND OF THE INVENTION

### 1. Field of the Invention

The present invention relates to an encryption method which is used for encryption or decryption of secret information.

### 2. Description of the Prior Art

In a conventional encryption method (refer to a following Patent Literature 1), one secret key C has been incorporated in a secret information protection system, and in order to encrypt or decrypt secret information A, the secret key C has been used as it has been as a secret key B to be used in a decryption circuit 1b. Fig. 8 is a view of an encryption method described in a patent literature (Japanese Paten Application Laid-Open No. 09-326166).

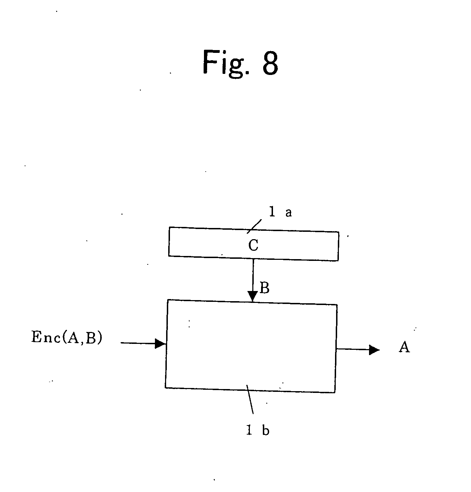

In Fig. 8, the encryption method uses a secret key C1a and a decryption circuit 1b. The secret key C1a is supplied to the decryption circuit 1b as it is, and is rendered as a secret key B to be used in the decryption circuit 1b in order to encrypt or decrypt the secret information A to encrypted secret information Enc (A, B).

However, with a configuration of such a conventional encryption method, when the secret key B has been hacked, there is no method of invalidating the hacked secret key B from the outside of the secret information protection system.

Alternatively, in order to invalidate the hacked secret key B, it is necessary to change the secret information protection system itself which incorporates the secret key C, so that an increase in cost is anticipated.

Alternatively, in order to prevent damage from hacking to the minimum, when the secret key B is changed and incorporated for every apparatus in advance, the secret key C is changed to be incorporated for every secret information protection system of each apparatus, so that an increase in cost is anticipated.

### SUMMARY OF THE INVENTION

The present invention is disclosed to solve the conventional problems described above, an object thereof is making it possible to change a secret key by means of software, namely achieving means of changing a secret key B by means of control software D of a secret information protection system incorporated outside the secret information protection system, and an object thereof is also achieving an encryption method capable of invalidating the hacked secret key B by means of only a setting change of the control software D even when the secret key B has been hacked.

Alternatively, an object of the present invention is achieving an encryption method capable of changing the secret key B by means of only a setting change of the control software D when the secret key B is changed and incorporated for every apparatus in advance in order to prevent damage caused by hacking to the minimum.

In order to solve the problems described above, the encryption method of the present invention, comprises: generating the secret key B by means of several generation means employing different embodiments; and supplying the generated secret key to a decryption circuit as the secret key B to be used in the decryption circuit.

In an encryption method of the present invention, wherein for secret information which is a key or contents required to be protected, said secret information is encrypted or decrypted to encrypted secret information by means of a first secret key for encrypting or decrypting said secret information, the encryption method is characterized by
performing a logical operation, an arithmetic operation, or an operation of a combination of the logical operation and the arithmetic operation to a second secret key to generate said first secret key, and
changing a computing type of said operation by means of a selection signal from an external source to make it possible to change said first secret key.

According to the configuration described above, the secret key B is generated by means of performing the logical operation, the arithmetic operation, or the operation of the combination of the arithmetic operation and the logical operation to a secret key C incorporated in the secret information protection system, and operation contents generated by the secret key B is made possible to be changed by means of the control software D of the secret information protection system in question incorporated outside the secret information protection system, thereby making it possible to invalidate the secret key B having been hacked by means of only changing the control software D and encrypted secret information Enc (A, B) incorporated outside the secret information protection system, or to prevent damage caused by the secret key B having been hacked to the minimum.

In another encryption method of the present invention, wherein for secret information which is a key or contents required to be protected, said secret information is encrypted or decrypted to encrypted secret information by means of a secret key for encrypting or decrypting said secret information, the encryption method is characterized by
from a modified key which is obtained by performing a logical operation, an arithmetic operation, or an operation of a combination of the logical operation and the arithmetic operation to said secret key, generating said secret key by performing a reverse operation of the operation to be used for generating said modified key, and
changing a computing type of said reverse operation by means of a selection signal from an external source to make it possible to change said secret key.

According to the configuration described above, the modified key which is obtained by performed the logical operation, the arithmetic operation, or the operation of the combination of the arithmetic operation and the logical operation to the secret key B is incorporated inside the secret information protection system, and the secret key B is reorganized from the modified key by performing the reverse operation of the operation to the secret key B, so that a reorganization method of the secret key B is made possible to be changed by the control software D of the secret information protection system in question incorporated outside the secret information protection system.

In another encryption method of the present invention, wherein for secret information which is a key or contents required to be protected, said secret information is encrypted or decrypted to encrypted secret information by means of a first secret key for encrypting or decrypting said secret information, the encryption method is characterized by
selecting one from keys, (m + n) in number which are obtained by summing up a secret key bundle consisting of second secret keys, n in number and a dummy key bundle consisting of dummy keys, m in number, which are spare secret keys when said first secret key is hacked and making it into said first secret key,
making a selection of said first secret key possible to be changed by means of a selection signal from an external source.

According to the configuration described above, the secret key bundle formed by arranging the secret keys, n in number, and the dummy key bundle formed by arranging the dummy keys, m in number, which are the spare secret keys when the secret key B is hacked are incorporated inside the secret information protection system, and the secret key B is selected from the secret keys, (n + m) in number, which are obtained by summing up the secret key bundle and the dummy key bundle, so that a selection of the secret key B is made possible to be changed by the control software D of the secret information protection system in question incorporated outside the secret information protection system.

In another encryption method of the present invention, wherein for secret information which is a key or contents required to be protected, said secret information is encrypted or decrypted to encrypted secret information by means of a secret key for encrypting or decrypting said secret information, the encryption method is characterized by
generating said secret key by selecting m in number out of said split generation keys, (n x m) in number in a generation key bundle which has said generation keys, n in number consisting of said split generation keys, m in number with k-bits, and
changing a selection of said split generation keys, m in number by means of a selection signal from an external source and making it possible to change said secret key.

According to the configuration described above, the generation keys, n in number, which are formed by splitting the secret key for every k-bits, are arranged, so that the formed generation key bundle is incorporated inside the secret information protection system, a plurality of generation split keys are selected from the generation key bundle, and one secret key B is generated by means of linking them, thereby making it possible to change the generation method of the secret key B by means of the control software D of the secret information protection system in question incorporated outside the secret information protection system.

In another encryption method of the present invention, wherein for secret information which is a key or contents required to be protected, there is provided decrypting means for encrypting or decrypting the secret information to encrypted secret information by means of a secret key for encrypting or decrypting the secret information, the encryption method is characterized by generating the secret key by means of combining a plurality of encryption methods configured as described above.

According to the configuration described above, it is possible to increase flexibility of generating the secret key B, namely flexibility of changing the secret key B besides obtaining a similar effect to either of the respective encryption methods described above.

In an encryption method according to a configuration described above, wherein for secret information which is a key or contents required to be protected, said secret information is encrypted or decrypted to encrypted secret information by means of a secret key for encrypting or decrypting said secret information, the encryption method, comprises:
generating the secret key and making it possible to change the secret key by a selection signal; generating a hash value from the secret key and the selection signal using a hash function device; and when the hash value which has been generated from the secret key and the selection signal in advance and a hash value are coincident with each other in the comparison, making it possible to decrypt the secret information by means of the secret key.

According to the configuration described above, it is possible to confirm whether the control software D and the secret key B have not been manipulated or not, and when they have been manipulated, it is possible to invalidate the secret key B having been hacked by means of only changing the control software D and encrypted secret information Enc (A, B) incorporated outside the secret information protection system.

In an encryption method according to a configuration described above, wherein for secret information which is a key or contents required to be protected, secret information is encrypted or decrypted to encrypted secret information by means of a secret key for encrypting or decrypting the secret information, the encryption method, comprises:
generating the secret key and making it possible to change the secret key by a selection signal; generating a hash value using a hash function device from the secret key, the selection signal, and a check value for guarantee; and when the hash value for comparison which has been generated from the secret key, the selection signal, and the check value in advance and a hash value are coincident with each other in the comparison, making it possible to decrypt the secret information by the secret key.

According to the configuration described above, the different check values are set for every apparatus, thereby making it possible to prevent damage caused by the secret key B having been hacked to the minimum.

According to the configuration described above, the selection signal is given by adding an ID unique to a removable medium to the selection signal.

According to the configuration described above, the different secret key B values are set for every removable medium, thereby making it possible to prevent damage caused by the secret key B which has been hacked to the minimum.

### BRIEF DESCRIPTION OF THE DRAWINGS

Fig. 1 is a block diagram showing an encryption method in a first embodiment of the present invention;
Fig. 2 is a block diagram showing an encryption method in a second embodiment of the present invention;
Fig. 3 is a block diagram showing an encryption method in a third embodiment of the present invention;
Fig. 4 is a block diagram showing an encryption method in a fourth embodiment of the present invention;
Fig. 5 is a block diagram showing an encryption method in a fifth embodiment of the present invention;
Fig. 6 is a block diagram showing an encryption method in a sixth embodiment of the present invention;
Fig. 7 is a block diagram showing an encryption method in a seventh embodiment of the present invention; and
Fig. 8 is a block diagram showing a conventional encryption method.

### DETAILED DESCRIPTION OF THE PREFERRED EMBODIMENTS

Hereinafter, referring to the drawings, description will be made of embodiments according to the present invention.

### (First embodiment)

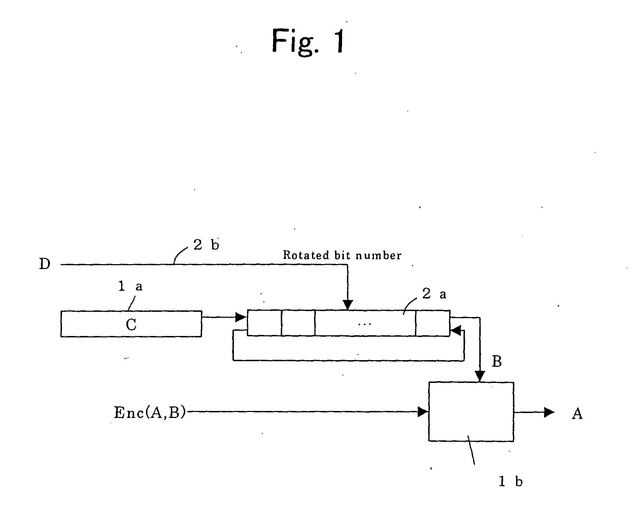

Fig. 1 is a view showing an encryption method in a first embodiment of the present invention. In Fig. 1, the same reference numerals are given to the same components as those in Fig. 8 and description thereof will be omitted.

In Fig. 1, an encryption method is achieved by: a secret key C1a; a shift register 2a for rotating the secret key C1a as a key operational circuit; a selection signal 2b for setting the number of rotation bits; and a decryption circuit 1b.

In this embodiment, the secret key C1a is supplied to the shift register 2a, the secret key C1a is rotated by the shift register 2a, and is supplied to the decryption circuit 1b as the secret key B to be used in the decryption circuit 1b. The selection signal 2b for setting up a rotated bit number is supplied to the shift register 2a, and the control software D sets up the selection signal 2b. When the secret key B has been hacked, the rotated bit number in the shift register is changed by means of a setting change in the control software D, thereby making it possible to invalidate the secret key B having been hacked by means of only changing the control software D and the encrypted secret information Enc (A, B) incorporated outside the secret information protection system without changing a secret information protection system. Alternatively, a setting value of the control software D and the encrypted secret information Enc (A, B) incorporated outside the secret information protection system are made to have different values for every apparatus in advance, thereby making it possible to prevent damage to the minimum when the secret key B has been hacked.

In this embodiment, although the shift register is used as a circuit for performing an operation, it may be configured that, without limiting to the shift register, a plurality of circuits to perform the operation to the secret key C1a are prepared, the operation is continuously performed to the secret key C1a using those circuits, the selection signal 2b is supplied to each circuit, and the control software D sets up a computing type of each circuit. Alternatively, there may be employed a method that a plurality of secret key C1a are prepared, and one key is selected out of the secret keys by the selector to be made as an input to the shift register 2a.

As described above, the encryption method of the first embodiment, wherein for secret information A which is a key or contents required to be protected, the secret information A is encrypted to the encrypted secret information Enc (A, B) by means of the secret key B for encrypting or decrypting the secret information A, comprises:
being able decrypt the encrypted secret information Enc (A, B) incorporated outside the secret information protection system by means of the secret key B to obtain the secret information A;
incorporating the secret key C which is a key for generating the secret key B inside the secret information protection system;
performing an operation of a logical operation, an arithmetic operation, or a combination of the logical operation and the arithmetic operation to the secret key C to generate the secret key B;
changing a computing type for generating the secret key B from the secret key C by means of the control software D of the secret information protection system in question incorporated outside the secret information protection system, so that the secret key B can be changed; and
by means of changing the encrypted secret information Enc (A, B) with the change of the secret key B due to a change of the control software D, being able to decrypt the secret information A even after the change of the control software D.

### (Second embodiment)

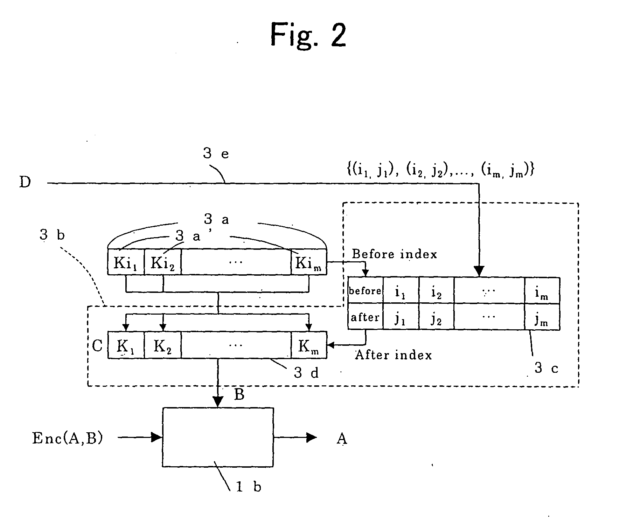

Fig. 2 is a view showing an encryption method in a second embodiment of the present invention. In Fig. 2, the same reference numerals are given to the same components as those in Fig. 8 and description thereof will be omitted.

In Fig. 2, an encryption method can be achieved by: after splitting one secret key C1a into split keys 3a', m in number with the same bit width (hereinafter, first through m split keys in the secret key C1a are sequentially represented as K1, K2, ... , Km from a high order, respectively), a modified key 3a which is formed by replacing these split keys 3a', m in number (hereinafter first through m split keys in the modified key are sequentially represented as Ki1, Ki2, ... , Kim from a high order, respectively);
a key reorganization circuit 3b comprising an index conversion table 3c for storing an index conversion method of the split key for reorganizing from the modified key 3a ((Ki1, Ki2, ..., Kim}) to the secret key C1a {K1, K2, ..., Km}, and a key storing register 3d;
a selection signal 3e for changing contents of the index conversion table 3c; and
the decryption circuit 1b.

In this embodiment, each split key 3a' of the modified key 3a is sequentially supplied to the key reorganization circuit 3b from Ki1, an index before replacing the split key in question is obtained by the index conversion table 3c, and the split key in question is stored in a location where the index shows in key storing register 3d. The modified key 3a is reorganized to the secret key C1a before modification by performing this procedure to all of the split keys 3a', m in number of the modified key 3a, and is supplied to the decryption circuit 1b as the secret key B to be used in the decryption circuit 1b. The selection signal 3e for changing the contents of the index conversion table 3c is supplied to the key reorganization circuit 3b, and the control software D sets up the selection signal 3e. When the secret key B has been hacked, the contents of the index conversion table 3c is changed by the setting change of the control software D, thereby making it possible to invalidate the secret key B having been hacked by means of only changing the control software D and the encrypted secret information Enc (A, B) incorporated outside the secret information protection system without changing a secret information protection system. Alternatively, a setting value of the control software D and the encrypted secret information Enc (A, B) incorporated outside the secret information protection system are made to have different values for every apparatus in advance, thereby making it possible to prevent damage to the minimum when the secret key B has been hacked.

In this embodiment, as for a split method of the split keys, m in number for forming one modified key, a split method where a length of each split key is not the same width may be employed. Alternatively, there may be employed a method where a plurality of modified keys 3a are prepared, and one of them is selected by the selector to be supplied to the key reorganization circuit. Further, when preparing a plurality of modified keys, the values of m may be different for every modified key.

As described above, the encryption method of the second embodiment, wherein for secret information A which is a key or contents required to be protected, the secret information A is encrypted to the encrypted secret information Enc (A, B) by means of the secret key B for encrypting or decrypting the secret information A, comprises:
being able decrypt the encrypted secret information Enc (A, B) incorporated outside the secret information protection system by means of the secret key B to obtain the secret information A;
performing an operation of a logical operation, an arithmetic operation, or a combination of the logical operation and the arithmetic operation to the secret key B to generate the modified key, so that the modified key is incorporated inside the secret information protection system;
being able to obtain the secret key B from the modified key by means of performing a reverse operation of the operation having been used for generating the modified key;
changing a computing type for obtaining the secret key B from the modified key by the control software D of the secret information protection system in question incorporated outside the secret information protection system, so that the secret key B can be changed; and
by means of changing the encrypted secret information Enc (A, B) with a change of the secret key B due to a change of the control software D, being able to decrypt the secret information A even after the change of the control software D.

### (Third embodiment)

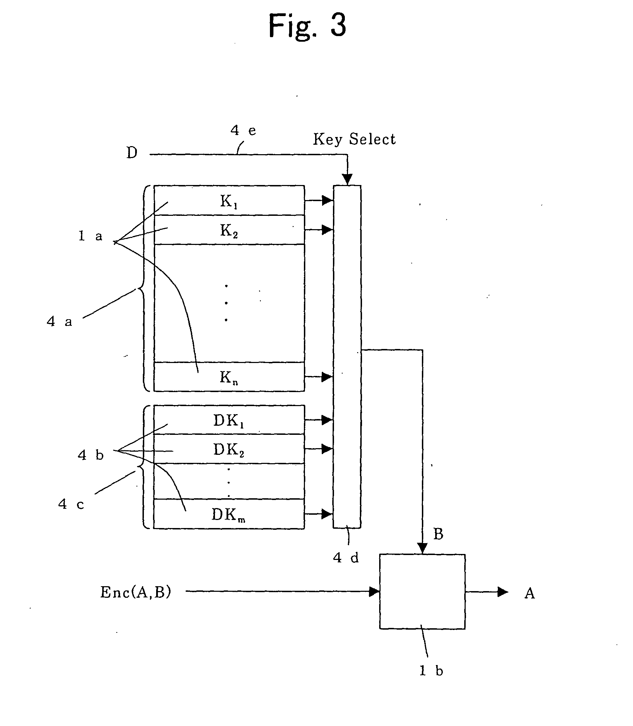

Fig. 3 is a view showing an encryption method in a third embodiment of the present invention. In Fig. 3, the same reference numerals are given to the same components as those in Fig. 8 and description thereof will be omitted.

In Fig. 3, an encryption method is achieved by: a secret key bundle 4a formed by arranging the secret keys C1a, n in number; a dummy key bundle 4c formed by arranging dummy keys 4b, m in number, which are spare secret keys when the secret key B is hacked; a selector 4d; a selection signal 4e for selecting one secret key B from the secret key bundle 4a and the dummy key bundle 4c; and the decryption circuit 1b.

In this embodiment, the secret key bundle 4a and the dummy key bundle 4c are supplied to the selector 4d which is generation means, and one secret key B is selected from the secret key bundle 4a and the dummy key bundle 4c. Incidentally, in an initial state (a state where the secret key B has not been hacked) , the selector 4d selects no dummy key. An output of the selector 4d is supplied to the decryption circuit 1b as the secret key B to be used in the decryption circuit 1b. The selection signal 4e is supplied to the selector 4d, and the control software D sets up the selection signal 4e. When the initial secret key B has been hacked, the select dummy key 4b is selected by a setting change of the control software D, thereby making it possible to invalidate the secret key B having been hacked by means of only changing the control software D and the encrypted secret information Enc (A, B) incorporated outside the secret information protection system without changing a secret information protection system.

As described above, the encryption method of the third embodiment, wherein for secret information A which is a key or contents required to be protected, the secret information A is encrypted to the encrypted secret information Enc (A, B) by means of the secret key B for encrypting or decrypting the secret information A, comprises:
being able decrypt the encrypted secret information Enc (A, B) incorporated outside the secret information protection system by means of the secret key B to obtain the secret information A;
incorporating the secret key bundle formed by arranging the secret keys, n in number, and the dummy key bundle formed by arranging the dummy keys, m in number, which are the spare secret keys when the secret key B would be hacked inside the secret information protection system,
wherein the secret key B is one selected key from the secret keys, (n + m) in number, which are obtained by summing up the secret key bundle and the dummy key bundle;
being able to change a selection of the secret key B from the secret key bundle and the dummy key bundle by the control software D of the secret information protection system in question incorporated outside the secret information protection system; and
by means of changing the encrypted secret information Enc (A, B) with a change of the secret key B due to a change of the control software D, being able to decrypt the secret information A even after the change of the control software D.

### (Fourth embodiment)

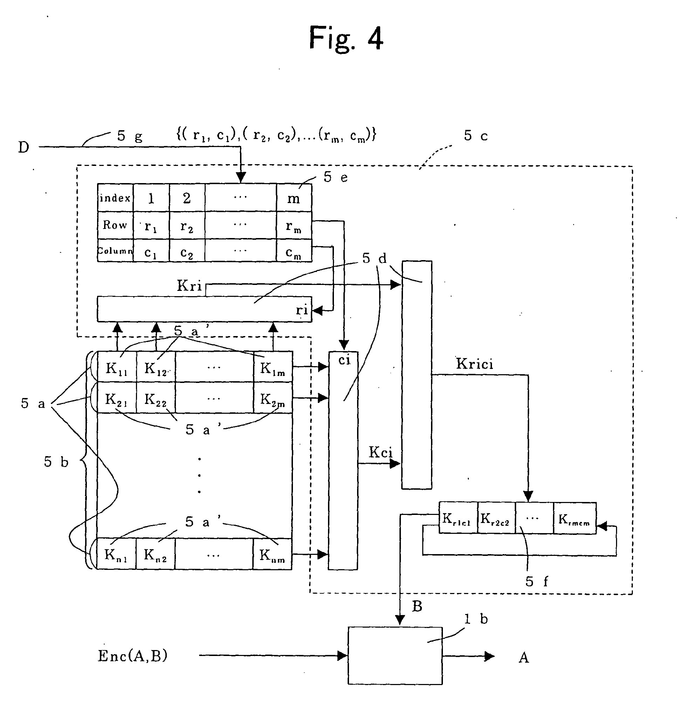

Fig. 4 is the view showing an encryption method in a fourth embodiment of the present invention. In Fig. 4, the same reference numerals are given to the same components as those in Fig. 8 and description thereof will be omitted.

In Fig. 4, an encryption method can be achieved by: a generation key bundle 5b formed by arranging generation keys 5a, n in number, wherein one secret key is split into split generation keys 5a', m in number for every k-bits to form the generation key 5a (hereinafter, split generation keys, m in number in an i-th generation key are sequentially represented as Ki1, Ki2, ..., Kim from a high order, respectively);
a key generation circuit 5c comprising split generation key selectors 5d for selecting one split generation key Krici from the generation key bundle 5b, an index acquisition table 5e for storing values of ri and ci in each selection when selecting the split generation keys Krici, m in number from the generation key bundle 5b using the split generation key selector 5d, and a shift register 5f for generating the secret key B to be used in the decryption circuit 1b by means of linking each split generation key;
a selection signal 5g for changing contents of the index acquisition table 5e; and
the decryption circuit 1b.

The index acquisition table 5e associates the split generation key with indices, m in number, and an associated split generation key is selected by specifying each index. In a case when changing the contents of the table, either or both of ri (Row) and ci (Column) in each index may be changed.

In this embodiment, the generation key bundle 5b is supplied to the key generation circuit 5c, in the key generation circuit 5c, the contents of the index acquisition table 5e are referred to and values of ri and ci in a current selection of the split generation key Krici is taken out, and the Krici is selected using the split generation key selector 5d from the generation key bundle 5b, and is supplied to the shift register 5f to be shifted. This procedure is repeated m times and each selected Krici is linked in order, so that one secret key is generated from a plurality of split generation keys 5a', and is supplied to the decryption circuit 1b as the secret key B to be used in the decryption circuit 1b. The selection signal 5g for changing the contents of the index acquisition table 5e is supplied to the key generation circuit 5c, and the control software D sets up the selection signal 5g.

When the secret key B has been hacked, the contents of the index acquisition table 5e is changed by a setting change of the control software D, thereby making it possible to invalidate the secret key B having been hacked by means of only changing the control software D and the encrypted secret information Enc (A, B) incorporated outside the secret information protection system without changing a secret information protection system. Alternatively, a setting value of the control software D and the encrypted secret information Enc (A, B) incorporated outside the secret information protection system are made to have different values for every apparatus in advance, thereby making it possible to prevent damage to the minimum when the secret key B has been hacked.

Incidentally, as one modification, a plurality of tables are prepared and one of them is selected among them, thereby the contents of the table may be changed.

As described above, the encryption method of the fourth embodiment, wherein for secret information A which is a key or contents required to be protected, the secret information A is encrypted to the encrypted secret information Enc (A, B) by means of the secret key B for encrypting or decrypting the secret information A, comprises:
being able decrypt the encrypted secret information Enc (A, B) incorporated outside the secret information protection system by means of the secret key B to obtain the secret information A;
forming the generation key by splitting the secret key into the split generation key, which is each element provided by splitting the one secret key into m in number for every k-bits, and incorporating the generation key bundle, which is formed by arranging the generation keys, n in number inside the secret information protection system;
selecting m in number out of the split generation keys, (n x m) in number, in the generation key bundle, and generating the secret key B by means of linking them;
being able to change a selection of the split generation keys, m in number from the generation key bundle by the control software D of the secret information protection system in question incorporated outside the secret information protection system, and change the secret key B; and
by means of changing the encrypted secret information Enc (A, B) with a change of the secret key B due to a change of the control software D, being able to decrypt the secret information A even after the change of the control software D.

### (Fifth embodiment)

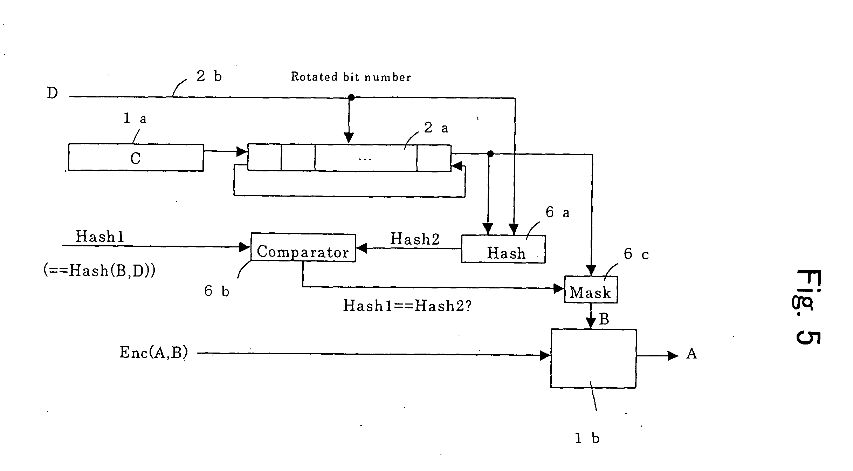

Fig. 5 is a view showing an encryption method in a fifth embodiment of the present invention. In Fig. 5, the same reference numerals are given to the same components as those in Fig. 1 and Fig. 8 and description thereof will be omitted.

In Fig. 5, an encryption method can be achieved by: the secret key C1a; the shift register 2a for rotating the secret key C1a; the selection signal 2b for setting up a rotated bit number in the shift register described above; the decryption circuit 1b; a device of a hash function 6a for generating a hash value, to which the selection signal 2b and the secret key C1a that has been rotated by the shift register 2a described above are supplied; a comparator 6b for comparing the hash value Hash2 generated by the device of the hash function 6a described above with a hash value Hash1 incorporated outside the secret information protection system; and a mask 6c for validating or invalidating the secret key B depending upon an above comparison result.

In this embodiment, the secret key C1a is supplied to the shift register 2a, and the secret key C1a is rotated by the shift register 2a, thereby generating the secret key B.

In order to verify that the secret key B and the control software D have not been manipulated, the hash value Hash1 which is generated by supplying the secret key B and the setting value of the control software D to the hash function 6a in advance is incorporated outside the secret information protection system, and the hash value Hash2 is calculated by supplying the rotated result of the secret key C1a and the setting value of the control software D to the hash function 6a inside the secret information protection system, so that the comparator 6b compares the Hash1 with the Hash2. When the Hash1 is different from the Hash2, it is judged that the secret key B or the control software D has been manipulated, thereby being able to make the secret key B not to be used by masking the secret key B or the control software D using the mask 6c when the secret key B or the control software D has been manipulated. When the Hash1 and the Hash2 are the same, the result of having rotating the secret key C1a is supplied to the decryption circuit 1b as the secret key B to be used in the decryption circuit 1b.

The selection signal 2b for setting a rotated bit number is supplied to the shift register 2a, and the control software D sets up the selection signal 2b. When the secret key B has been hacked, the rotated bit number in the shift register 2a is changed by a setting change in the control software D, thereby making it possible to invalidate the secret key B having been hacked by means of only changing the control software D and the encrypted secret information Enc (A, B) incorporated outside the secret information protection system without changing a secret information protection system. Alternatively, a setting value of the control software D and the encrypted secret information Enc (A, B) incorporated outside the secret information protection system are made to have different values for every apparatus in advance, thereby making it possible to prevent damage to the minimum when the secret key B has been hacked.

Incidentally, although the generation means of the secret key B according to the first embodiment is used in this embodiment, the generation means of the second to fourth embodiments or a combination between them (a eighth embodiment) may be used.

As described above, in the encryption method of the fifth embodiment,
the hash value 1 generated from the secret key B and the setting value of the control software D of the secret information protection system in question incorporated outside the secret information protection system using the hash function is retained outside the secret information protection system,
after generating the secret key B inside the secret information protection system according to the setting value of the control software D, the hash value 2 is generated from the generated secret key B and control software D using the hash function, and the existence of manipulation to the secret key B and the control software D is judged by means of comparing the hash value 2 generated inside the secret information protection system with the hash value 1 retained outside the secret information protection system,
thereby making it possible to decrypt the secret information A by means of the secret key B after verifying that the secret key B and the control software D have not been manipulated.

### (Sixth embodiment)

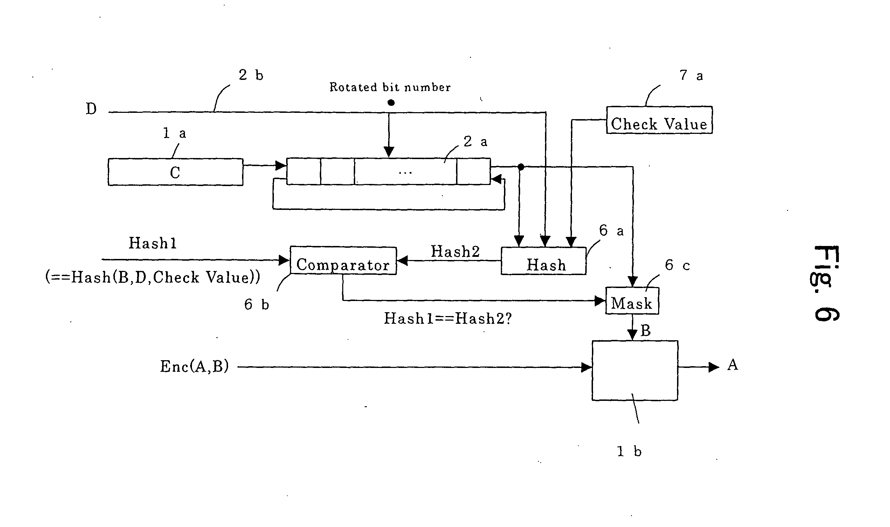

Fig. 6 is a view showing an encryption method in a sixth embodiment of the present invention. In Fig. 6, the same reference numerals are given to the same components as those in Fig. 1, Fig. 5, and Fig. 8 and description thereof will be omitted.

In Fig. 6, an encryption method can be achieved by: the secret key C1a; the shift register 2a for rotating the secret key C1a; the selection signal 2b for setting up a rotated bit number in the shift register 2a described above; generation means of a check value 7a incorporated inside the secret information protection system in order to verify that the secret key B and the control software D have not been manipulated; the decryption circuit 1b; the device of the hash function 6a for generating a hash value Hash, to which the selection signal 2b, the secret key C1a of having been rotated by the shift register 2a described above, and the check value 7a are supplied; the comparator 6b for comparing the hash value Hash2 generated by the device of the hash function 6a described above with the hash value Hash1 incorporated outside the secret information protection system; and a mask 6c for validating or invalidating the secret key B depending upon an above comparison result.

In this embodiment, the secret key C1a is supplied to the shift register 2a, and the secret key C1a is rotated by the shift register 2a, thereby generating the secret key B.

In order to verify that the secret key B and the control software D have not been manipulated, the hash value Hash1 which is generated by supplying the secret key B, the setting value of the control software D, and the check value 7a to the hash function are incorporated outside the secret information protection system, and the hash value Hash2 is calculated by supplying the rotated result of the secret key C1a, the setting value of the control software D, and the check value 7a to the hash function 6a inside the secret information protection system, so that the comparator 6b compares the hash values of Hash1 and the Hash2. When the hash values of Hash1 and Hash2 are different, it is judged that the secret key B or the control software D has been manipulated, thereby being able to make the secret key B not to be used by masking the secret key B or the control software D using the mask 6c when the secret key B or the control software D has been manipulated. When the hash values of the Hash1 and the Hash2 are the same, a result of having rotated the secret key C1a is supplied to the decryption circuit 1b as the secret key B to be used in the decryption circuit 1b.

The selection signal 2b for setting up a rotated bit number is supplied to the shift register 2a, and the control software D sets up the selection signal 2b. When the secret key B has been hacked, the rotated bit number in the shift register is changed by a setting change in the control software D, thereby making it possible to invalidate the secret key B having been hacked by means of only changing the control software D and the encrypted secret information Enc (A, B) incorporated outside the secret information protection system without changing a secret information protection system. Alternatively, the setting value of the control software D and the encrypted secret information Enc (A, B) incorporated outside the secret information protection system, or the check value 7a are made to have different values for every apparatus in advance, thereby making it possible to prevent damage to the minimum when the secret key B has been hacked.

Incidentally, although the generation means of the secret key B according to the first embodiment is used in this embodiment, the generation means of the second to fourth embodiments or a combination between them (the eighth embodiment) may be used.

As described above, in the sixth embodiment according to the first to the fourth embodiments, the check value 7a for guaranteeing that the secret key B or the control software D of the secret information protection system in question incorporated outside the secret information protection system has not been manipulated is retained inside the secret information protection system,
the hash value Hash1 which is generated using the hash function device from the secret key B, the setting value of the control software D, and the check value 7a is retained outside the secret information protection system, and
after generating the secret key B inside the secret information protection system according to the setting value of the control software D, the hash value Hash2 is generated using the hash function device from the generated secret key B, the setting value of the control software D, and the check value 7a retained inside the secret information protection system, and the existence of manipulation to the secret key B and the control software D is judged by means of comparing the hash value 2 generated inside the secret information protection system with the hash value 1 retained outside the secret information protection system,
thereby making it possible to decrypt the secret information A by means of the secret key B after verifying that the secret key B and the control software D have not been manipulated.

### (Seventh embodiment)

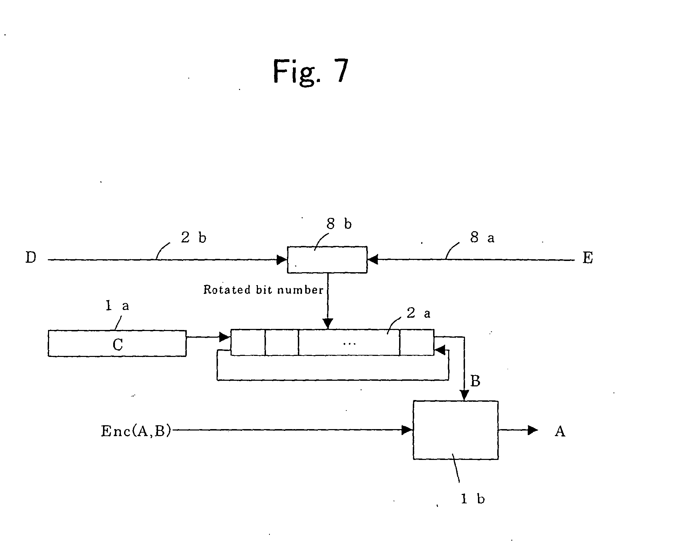

Fig. 7 is a view showing an encryption method in a seventh embodiment of the present invention. In Fig. 7, the same reference numerals are given to the same components as those in Fig. 1 and Fig. 8 and description thereof will be omitted.

In Fig. 7, an encryption method can be achieved by: the secret key C1a; the shift register 2a for rotating the secret key C1a; the selection signal 2b for setting up a rotated bit number in the shift register 2a described above; the decryption circuit 1b; an ID number E8a supplied from a removable medium; and an adder 8b.

In this embodiment, the secret key C1a is supplied to the shift register 2a, the secret key C1a is rotated by the shift register 2a, and is supplied to the decryption circuit 1b as the secret key B to be used in the decryption circuit 1b. A value of the selection signal 2b and the ID number E8a supplied from the removable medium are added by the adder 8b and an added result thereof is made a rotated bit number to the shift register 2a, and the control software D sets up the selection signal 2b.

The different secret keys B are generated for every removable medium, thereby making it possible to prevent damage to the minimum when the secret key B has been hacked.
Alternatively, when the secret key B has been hacked, the rotated bit number in the shift register 2a is changed by a setting change in the control software D, thereby making it possible to invalidate the secret key B having been hacked by means of only changing the control software D and the encrypted secret information Enc (A, B) incorporated outside the secret information protection system without changing a secret information protection system.

Incidentally, although this embodiment is applied to the first embodiment, it is only different in that the signal of the ID number E is added to the selection signal of the first embodiment, thus it can be applied also to respective other embodiments. In addition, although the selection signal and the ID number E are supplied to the generation means through the adder 8b, both the selection signal and the ID number E may be added to the generation means to change the secret key B.

As described above, according to this embodiment, in a system where the secret information protection system and the removable medium communicate, the ID unique to the removable medium, which the removable medium retains, is made into a factor that determines a generation method of the secret key B with the control software D, and the different secret keys B are generated for every removable medium, so that it is applicable to respective embodiments described above.

### (Eighth embodiment)

An encryption method of the eighth embodiment, wherein for secret information A which is a key or contents required to be protected, the secret information A is encrypted to the encrypted secret information Enc (A, B) by means of the secret key B for encrypting or decrypting the secret information A, comprises:
generating the secret key B by combining a plurality of generation methods of the secret key B described in the first embodiment to the fourth embodiment;
being able to change respective generation methods combined by the control software D of the secret information protection system in question outside the secret information protection system, and change the secret key B, and
by means of changing the encrypted secret information Enc (A, B) with a change of the secret key B due to a change of the control software D, being able to decrypt the secret information A even after the change of the control software D.

For example, selecting the secret key B supplied to the decryption circuit 1b by the selection means from the secret keys B obtained from the first embodiment to the fourth embodiment, making the secret key B from the second embodiment to the fourth embodiment into the secret key C of the first embodiment, making the secret key B of the first, third, and fourth embodiment into the modified key of the second embodiment, making the secret key B of the first, second, and fourth embodiment into one of the secret keys in the secret key bundle of the third embodiment, and making the secret key B of the first, second, and third embodiment into one of the generation keys in the generation key bundle of the fourth embodiment, or the like can be considered.

An encryption method of the present invention is used as described above, so that when the secret key B has been hacked, the generation method of the secret key B is changed by a setting change of the control software D of the secret information protection system in question incorporated outside the secret information protection system, thereby making it possible to invalidate the secret key B having been hacked without changing the secret information protection system, and being able to reduce cost required for invalidating the secret key B having been hacked. Alternatively, a setting value of the control software D and the encrypted secret information Enc (A, B) incorporated outside the secret information protection system are made to have different values for every apparatus in advance, thereby making it possible to prevent damage to the minimum when the secret key B has been hacked.

The present invention provides an encryption method which enables to change a secret key B by means of control software D of a secret information protection system in question incorporated outside a secret information protection system. For secret information A which is a key or contents required to be protected, the encryption method comprises a decryption circuit 1b for encrypting or decrypting the secret information A to encrypted secret information Enc (A, B) by means of a secret key B for encrypting or decrypting the secret information A, wherein a secret key C is supplied to a shift register 2a, the secret key C is rotated, and the secret key B is generated. The number of rotation bits of the shift register 2a can be changed by a selection signal which is set up by the control software D, and changes the secret key B.

## Claims

1. An encryption method wherein for secret information which is a key or contents required to be protected, said secret information is encrypted or decrypted to encrypted secret information by means of a first secret key for encrypting or decrypting said secret information, **characterized by**
performing a logical operation, an arithmetic operation, or an operation of a combination of the logical operation and the arithmetic operation to a second secret key to generate said first secret key, and
changing a computing type of said operation by means of a selection signal from an external source to make it possible to change said first secret key.

2. An encryption method wherein for secret information which is a key or contents required to be protected, said secret information is encrypted or decrypted to encrypted secret information by means of a secret key for encrypting or decrypting said secret information, **characterized by**
from a modified key which is obtained by performing a logical operation, an arithmetic operation, or an operation of a combination of the logical operation and the arithmetic operation to said secret key, generating said secret key by performing a reverse operation of the operation to be used for generating said modified key, and
changing a computing type of said reverse operation by means of a selection signal from an external source to make it possible to change said secret key.

3. An encryption method wherein for secret information which is a key or contents required to be protected, said secret information is encrypted or decrypted to encrypted secret information by means of a first secret key for encrypting or decrypting said secret information, **characterized by**
selecting one from keys, (m + n) in number, which are obtained by summing up a secret key bundle consisting of second secret keys, n in number and a dummy key bundle consisting of dummy keys, m in number, which are spare secret keys when said first secret key would be hacked and making it into said first secret key, and
making it possible to change a selection of said first secret key by means of a selection signal from an external source.

4. An encryption method wherein for secret information which is a key or contents required to be protected, said secret information is encrypted or decrypted to encrypted secret information by means of a secret key for encrypting or decrypting said secret information, **characterized by**
generating said secret key by selecting m in number from said split generation key, (n x m) in number in a generation key bundle comprising generation keys, n in number consisting of split generation keys, m in number with k-bits, and
changing a selection of said split generation keys, m in number by means of a selection signal from an external source to make it possible to change said secret key.

5. In an encryption method wherein for secret information which is a key or contents required to be protected, said secret information is encrypted or decrypted to encrypted secret information by means of a secret key for encrypting or decrypting said secret information, the encryption method according to claim 1, claim 2, claim 3, or claim 4, comprising:
generating said secret key and making it possible to change said secret key by means of a selection signal;
generating a hash value using a hash function device from said secret key and said selection signal, and when a hash value for comparison generated from said secret key and said selection signal in advance and said hash value are coincident with each other in this comparison, making it possible to decrypt secret information by said secret key.

6. In an encryption method wherein for secret information which is a key or contents required to be protected, said secret information is encrypted or decrypted to encrypted secret information by means of a secret key for encrypting or decrypting said secret information, the encryption method according to claim 1, claim 2, claim 3, or claim 4, comprising:
generating said secret key and making it possible to change said secret key by means of a selection signal; generating a hash value using a hash function device from said secret key, said selection signal, and a check value for guarantee; and when a hash value for comparison generated from said secret key, said selection signal, and said check value in advance and said hash value are coincident with each other in this comparison, making it possible to decrypt secret information by said secret key.

7. The encryption method according to claim 1, claim 2, claim 3, or claim 4, wherein the selection signal is provided by adding an ID unique to a removable medium to said selection signal.
